# EUROPEAN PATENT APPLICATION

(11) **EP 4 691 992 A1**
(43) Date of publication of application: **11.02.2026**
(21) Application number: 24780217.6
(22) Date of filing: 25.03.2024
(51) Int. Cl.: C01G 49/00, C01B 3/08

(54) **METHOD FOR PRODUCING OXYGEN CARRIER, METHOD FOR PRODUCING HYDROGEN, AND APPARATUS FOR PRODUCING HYDROGEN**

(30) Priority: 28.03.2023 JP 2023052093
(71) Applicant: Japan Carbon Frontier Organization, Tokyo 105-0003 (JP); National University Corporation Gunma University, Maebashi-shi, Gunma 371-8510 (JP); Osaka Gas Co., Ltd., Osaka-shi, Osaka 541-0046 (JP)
(72) Inventor: LIN, Shiying, Tokyo 305-0003 (JP); SAITO, Tomonao, Tokyo 305-0003 (JP); KANNARI, Naokatsu, Maebashi-shi, Gunma 371-8510 (JP); SHIMIZU, Anon, Maebashi-shi, Gunma 371-8510 (JP); UEDA, Kentaro, Osaka-shi, Osaka 541-0045 (JP); SHIBATANI, Tetsuya, Osaka-shi, Osaka 541-0045 (JP); KAWABATA, Yuki, Osaka-shi, Osaka 541-0045 (JP)
(74) Representative: Grünecker Patent- und Rechtsanwälte PartG mbB
(86) International application number: PCT/JP2024/011764
(87) International publication number: WO 2024/204101

(57) **Abstract**

Provided is a method for producing a highly active oxygen carrier at low cost, and a method for producing hydrogen and an apparatus for producing hydrogen using the highly active oxygen carrier.

Solution

A method for producing an oxygen carrier of the present invention is a method for producing an oxygen carrier formed of an activated iron titanate containing an alkali titanate and an iron oxide by calcining a mixture of iron titanate particles and an alkali component. The mixture of the iron titanate particles and the alkali component is prepared by any of: physically mixing the iron titanate particles and an alkaline compound; and spraying an aqueous solution of the alkaline compound to the iron titanate particles or impregnating the iron titanate particles with the aqueous solution of the alkaline compound and then drying the sprayed or impregnated iron titanate particles.

## Description

### Field

The present invention relates to a method for producing an oxygen carrier, a method for producing hydrogen, and an apparatus for producing hydrogen.

### BACKGROUND

A chemical looping combustion method is a method for burning a fuel without direct contact between the fuel and air by using an oxygen carrier. In this combustion method, the fuel is burned by oxygen in the oxygen carrier, and a high concentration carbon dioxide is recovered (for example, see Patent Literature 1). The chemical looping technology is used for also fuel gasification. In the chemical looping technology, a low-price and highly active oxygen carrier is desired.

As the oxygen carrier for the chemical looping combustion, conventionally, iron oxide-based materials have been widely used. However, natural iron ores (hematite, magnetite, ilmenite, and the like) are low in reaction activity, thus not suitable. There are FeO/Al₂O₃-based materials as an example for synthetic material oxygen carriers. These materials are not only expensive, but also prone to attrition.

### Citation List

### Patent Literature

Patent Literature 1: Japanese Unexamined Patent Application Publication No. 2018-58002

### Summary of Invention

### TECHNICAL PROBLEM

Although there is a demand for highly active oxygen carriers that can be produced at low cost, such materials have yet to be realized.

Therefore, it is an object of the present invention to provide a method for producing a highly active oxygen carrier at low cost, and a method for producing hydrogen and an apparatus for producing hydrogen using the highly active oxygen carrier.

### SOLUTION TO PROBLEM

The present inventors have conducted extensive studies to solve the above-described problem, and as a result, focused on that alkali components such as potassium tend to preferentially bind to titanium oxide in iron titanate at high temperatures to form alkali titanates and liberate highly dispersed iron oxide, and found that, through a reaction of a mixture of an iron titanate and an alkali component at a high temperature, an alkali titanate having a high melting point is formed in the iron titanate, and a highly dispersed iron oxide is liberated. Thus, the present inventors completed the present invention.

The present invention is a method for producing an oxygen carrier formed of an activated iron titanate containing an alkali titanate and an iron oxide by calcining a mixture of iron titanate particles and an alkali component. The mixture of the iron titanate particles and the alkali component is prepared by any of: physically mixing the iron titanate particles and an alkaline compound; and spraying an aqueous solution of the alkaline compound to the iron titanate particles or impregnating the iron titanate particles with the aqueous solution of the alkaline compound and then drying the sprayed or impregnated iron titanate particles.

The present invention is a method for producing an oxygen carrier formed of an activated iron titanate containing an alkali titanate and an iron oxide by calcining a mixture of iron titanate particles and an alkali component. The iron titanate particles are brought into contact with the alkali component in a high temperature reactor.

Further, the present invention is a method for producing hydrogen that includes: an air combustion step of burning a fuel in a presence of iron titanate particles; a fuel reaction activation step of bringing the iron titanate particles into contact with an alkali component to form an activated iron titanate containing an alkali titanate and an iron oxide; and a hydrogen generation step of generating hydrogen through a reaction of the iron oxide generated in the fuel reaction activation step and steam.

Further, the present invention is an apparatus for producing hydrogen, and includes: an air combustion tower that burns a fuel in a presence of iron titanate particles; a fuel reaction activation tower that brings the iron titanate particles into contact with an alkali component to form an activated iron titanate containing an alkali titanate and an iron oxide; and a hydrogen generation tower that generates hydrogen through a reaction of the iron oxide generated in the fuel reaction activation step and steam.

### ADVANTAGEOUS EFFECTS OF INVENTION

The present invention can provide the method for producing the highly active oxygen carrier at low cost, and the method for producing hydrogen and the apparatus for producing hydrogen using the highly active oxygen carrier.

### BRIEF DESCRIPTION OF DRAWINGS

FIG. 1 is a schematic diagram for describing a method for producing hydrogen of the present invention.
FIG. 2 is a graph illustrating a result of an equilibrium composition calculation.
FIG. 3 is a graph illustrating a result of the equilibrium composition calculation.
FIG. 4 is a graph illustrating a result of the equilibrium composition calculation.
FIG. 5 is a graph illustrating a result of the equilibrium composition calculation.
FIG. 6 is an XRD profile of an activated ilmenite.
FIG. 7 is an XRD profile of an activated ilmenite.
FIG. 8 is an XRD profile of an activated ilmenite.
FIG. 9 is a schematic diagram of an apparatus used for a redox reaction of the activated ilmenites.
FIG. 10 is a graph illustrating mass change ratios in the reduction reaction of the activated ilmenites.
FIG. 11 is a graph illustrating mass change ratios in a steam oxidation reaction of the activated ilmenites.
FIG. 12 is a graph illustrating an influence of a potassium loading amount on a reduction reactivity of the activated ilmenite.
FIG. 13 is a graph illustrating an influence of a (K/Ti) ratio on the reduction reactivity of the activated ilmenite.
FIG. 14 is a graph illustrating an influence of the potassium loading amount on a steam oxidation reactivity of the activated ilmenite.

### DETAILED DESCRIPTION

Hereinafter, a method for producing an oxygen carrier, a method for producing hydrogen, and an apparatus for producing hydrogen of the present invention are described. In the present invention, iron titanate particles are activated through a reaction with an alkali component, thereby producing an oxygen carrier. Natural iron titanate (ilmenite) has been known as a low-cost natural sand-like mineral. While a content of titanium oxide in the iron titanate is not especially specified, the titanium oxide content is preferably equal to or more than half. The alkali component means potassium, sodium, and the like.

Among iron titanates, ilmenite represented by Fe₂TiO₅ is preferable. When a mixture of ilmenite and alkali is calcined, a potassium titanate having a high melting point is formed as expressed by a formula (1) below, and harmless iron oxide is liberated. In this description, a combination of potassium titanate (K₂TiO₃) and iron oxide (hematite: Fe₂O₃) is referred to as an activated ilmenite. The activated ilmenite is effective as a highly active oxygen carrier. Since the ilmenite is a natural sand-like ore, the ilmenite enables producing a highly active oxygen carrier at low cost.

Fe₂TiO₅ + K2CO3 ⇒ K₂TiO₃ + Fe₂O₃ + CO₂ (1)

As the ilmenite, particles having a particle diameter of about 10 µm to 500 µm can be used. The ilmenite particles can be physically mixed with, for example, an alkaline compound to prepare a mixture. Examples of the alkaline compound include, specifically, potassium carbonate, potassium hydrogen carbonate, potassium hydroxide, sodium carbonate, sodium hydrogen carbonate, and sodium hydroxide. It is preferred to combine about 10 pts.mass of the alkaline compound with respect to 100 pts.mass of the ilmenite particles. For example, by stirring with potassium carbonate or the like for about 1 to 10 minutes, a desired mixture is obtained.

The mixture of the ilmenite particles and alkali can also be prepared by spraying or impregnating using an aqueous solution of the alkaline compound. In the case of spraying, for example, potassium carbonate is dissolved in pure water to prepare an aqueous solution having a concentration of 50 to 100 mass%, and the obtained aqueous solution is sprayed to the ilmenite particles. It is preferred to spray the aqueous solution while shaking the ilmenite particles. In the case of impregnating, for example, potassium carbonate is dissolved in pure water to prepare an aqueous solution having a concentration of 5 to 10 mass%. The ilmenite particles are stirred in the aqueous solution for about 30 to 60 minutes to impregnate the ilmenite particles with the alkali component.

By drying the ilmenite particles sprayed or impregnated with the aqueous solution of the alkaline compound at 100°C to 120°C for about 30 to 60 minutes using a dryer and the like, a desired mixture is obtained.

By calcining the mixture placed in an alumina container at, for example, 800°C to 980°C for about 0.5 to 3 hours, an alkali titanate is formed and iron oxide is liberated. The calcining temperature is preferably 800°C to 950°C, and more preferably 900°C to 920°C. The calcining period can be appropriately selected corresponding to the calcining temperature.

Alternatively, the activated ilmenite can be also produced by bringing the ilmenite particles into contact with the alkali component in a high temperature reactor. Specifically, the alkaline compound is introduced into a fluidized bed or a circulating fluidized bed using the ilmenite particles as a fluidizing medium, and the ilmenite particles are reacted with the alkali component in a fluidized bed reactor. The temperature of the high temperature reactor is preferably 800°C to 980°C. Through this reaction, the activated ilmenite containing an alkali titanate and an iron oxide is obtained as expressed with the formula (1).

A fuel containing an alkali component, such as biomass or lignite, may also be used as an alkali source. A fuel containing an alkali component is introduced into a fluidized bed or a circulating fluidized bed using the ilmenite particles as a fluidizing medium, and the fuel is burned or gasified. In this case also, the ilmenite is brought in contact with an alkaline compound in the fuel, and the activated ilmenite containing the alkali titanate and the iron oxide is obtained as expressed with the formula (1).

The activated ilmenite can be used as an active oxygen carrier in chemical looping combustion, gasification, and a hydrogen production process. The activated ilmenite can be also used in a Steam-Iron hydrogen production process. When the iron oxide liberated from the activated ilmenite is reduced to iron, the iron forms a highly dispersed iron catalyst, which is also applicable to a catalytic synthesis process.

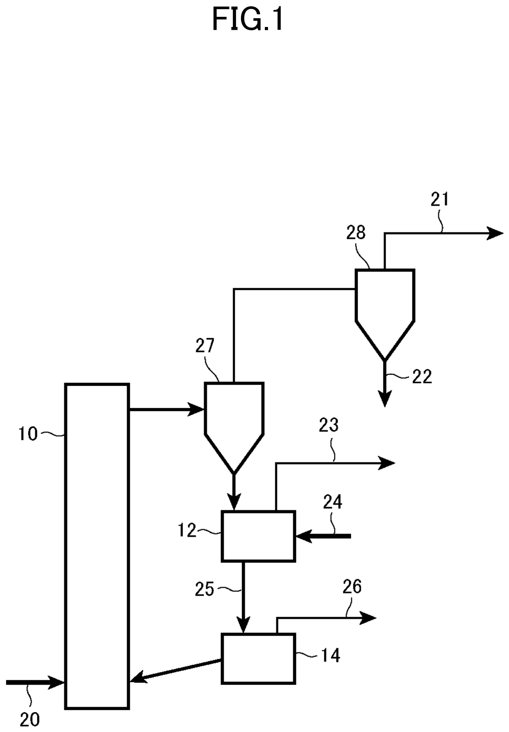

The oxygen carrier produced by the method of the present invention is applicable to the production of hydrogen. This is described with reference to FIG. 1.

An air combustion tower 10 contains the ilmenite particles as a circulating fluidizing medium (not illustrated), and an air 20 is introduced into the air combustion tower 10. Combustion is performed at a temperature of 950°C or more inside the air combustion tower 10. The ilmenite particles are introduced into a fuel reaction activation tower 12 passing through a first cyclone 27 together with an exhaust gas. A part of the combustion exhaust gas introduced into the first cyclone 27 is introduced into a second cyclone 28, and N₂ 21 and an ash 22 are discharged.

A fuel 24 containing the alkali component is introduced into the fuel reaction activation tower 12, and burned at a temperature of about 850°C to 950°C. By a reaction with titanium in the ilmenite, a titanate is formed. Further, iron oxide in the ilmenite is reduced, and an activated ilmenite containing potassium titanate and iron oxide is obtained. As the fuel 24 containing the alkali component, an alkaline compound and a fuel can be supplied in combination. Alternatively, a fuel containing an alkali component, such as lignite and biomass, may be supplied as the fuel 24 containing an alkali component.

The reaction inside the fuel reaction activation tower 12 can be expressed, for example, with a formula below.

Fe₂TiO₅ + K2CO3 + 1/2C ⇒ K₂TiO₃ + 2FeO + 3/2CO₂

CO₂ 23 generated in the reaction is discharged from the fuel reaction activation tower 12, and an activated ilmenite 25 is introduced into a hydrogen generation tower 14. Although not illustrated, steam is introduced into the hydrogen generation tower 14. Inside the hydrogen generation tower 14, hydrogen is generated through a reaction indicated below.

2FeO + 2/3H₂O ⇒ 2/3Fe₃O₄ + 2/3H₂

H₂ 26 generated here is discharged from the hydrogen generation tower 14.

Since the iron oxide liberated in the generation of the potassium titanate has an excellent reactivity, the reduction reaction of the iron oxide inside the fuel reaction activation tower 12 is accelerated. A hydrogen generation reaction in the hydrogen generation tower 14 is also accelerated because of the same reason. The activated ilmenite produced by the method of the present invention has a high reaction activity, and accelerates oxidation/reduction/hydrogen production reaction, therefore, can be effectively used for hydrogen production.

While the method for producing hydrogen using the activated ilmenite produced in a system inside a circulating fluidized bed is described in the above-described example, hydrogen can be produced through a reaction of an activated ilmenite produced outside the system and steam.

### Examples

While the present invention is specifically described below based on examples, these examples do not limit the purpose of the present invention. The present invention is not limited to these examples.

### 1. Equilibrium Composition Calculation

Equilibrium calculations for formation of potassium titanate and sodium titanate from ilmenite and alkali were performed using commercially available chemical equilibrium calculation software (HSC Chemistry). Initial conditions were input under an oxidizing atmosphere and a reducing atmosphere, and calculation results were obtained based on the Gibbs principle (principle of minimum free energy).

### <Potassium Titanate Formation Condition>

Input condition under oxidizing atmosphere Fe₂TiO₅ 100 kmol, K2CO3 20 kmol, O₂ 10 kmol
Input condition under reducing atmosphere Fe₂TiO₅ 100 kmol, K2CO3 20 kmol, H₂ 10 kmol

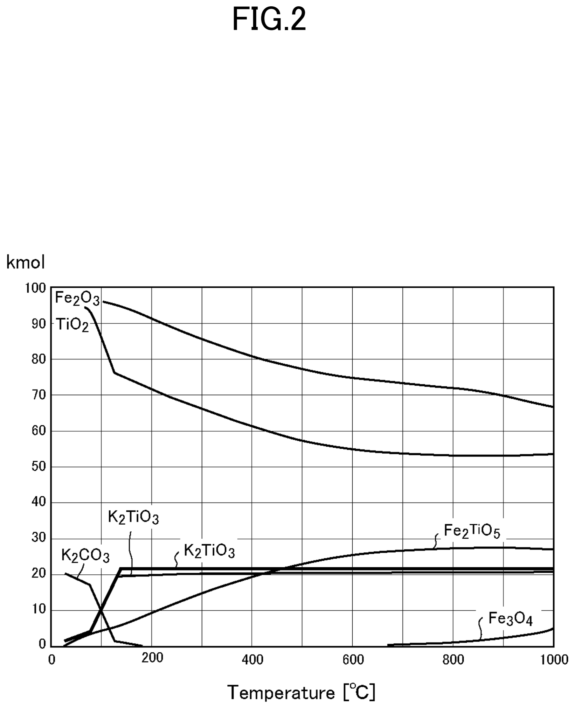

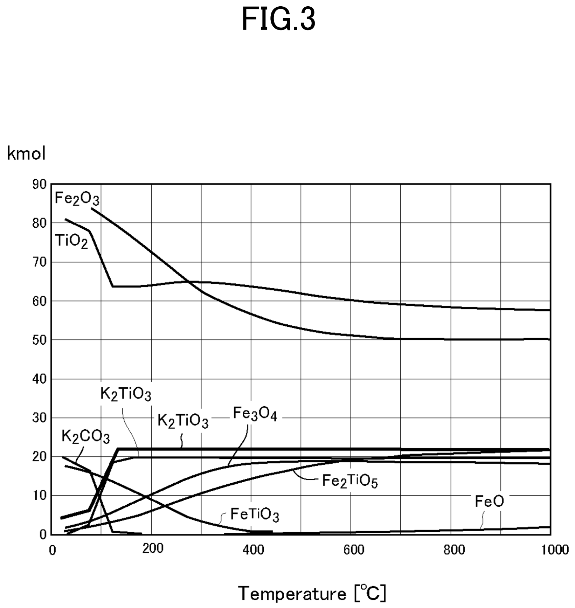

FIG. 2 and FIG. 3 illustrate the calculation results of the potassium titanate formation condition under the oxidizing atmosphere and the reducing atmosphere, respectively.

### <Sodium Titanate Formation Condition>

Input condition under oxidizing atmosphere Fe₂TiO₅ 100 kmol, Na₂CO₃ 20 kmol, O₂ 10 kmol
Input condition under reducing atmosphere Fe₂TiO₅ 100 kmol, Na₂CO₃ 20 kmol, H₂ 10 kmol

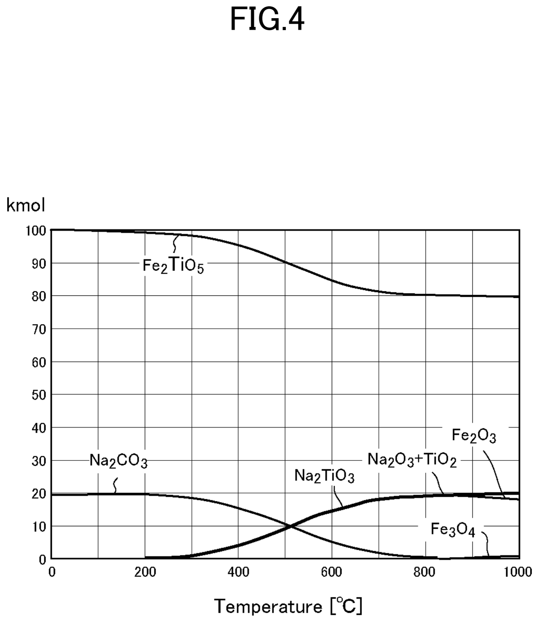

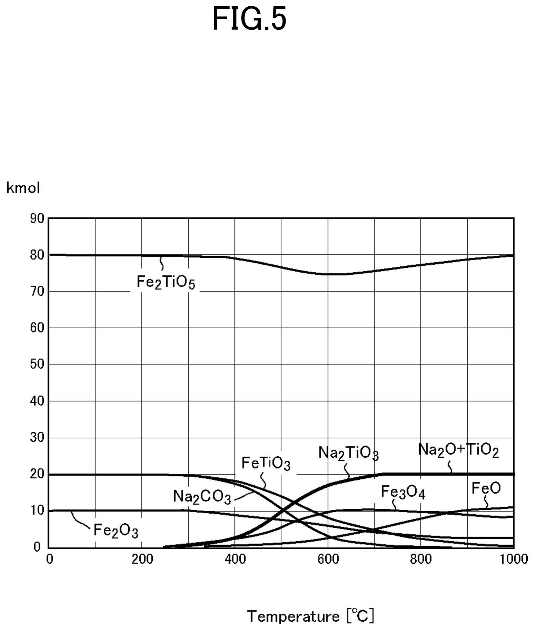

FIG. 4 and FIG. 5 illustrate the calculation results of the sodium titanate formation condition under the oxidizing atmosphere and the reducing atmosphere, respectively.

FIGS. 2, 3 indicate that the alkali component selectively binds to titanium oxide to form the potassium titanate in both the oxidizing atmosphere and the reducing atmosphere. FIGS. 4, 5 indicate that the sodium titanate is formed in a high temperature range of 600°C to 1000°C in both the oxidizing atmosphere and the reducing atmosphere.

From the calculation results described above, it was confirmed that alkali, such as potassium, tends to bind to titanium oxide in the ilmenite at high temperature to constitute the alkali titanate.

### 2. Production of Oxygen Carrier

By calcining the mixture of the ilmenite particles and the alkali component, an oxygen carrier formed of the activated ilmenite was produced by the method of the present invention.

### <Physical Mixing Method>

20 g of ilmenite particles (average particle diameter: 120 µm) and 1.8 g of potassium carbonate were mixed by stirring, thereby preparing a physical mixture. The obtained physical mixture was placed in an alumina container and calcined at 920°C for 3 hours, thereby producing an activated ilmenite (potassium-modified ilmenite) 1. The potassium loading amount of the activated ilmenite 1 is about 2.0 wt%, and a mole ratio (K/Ti) of potassium to titanium is about 0.084.

### <Impregnation Mixing Method>

1.8 g of potassium carbonate was dissolved in 20 mL of pure water to prepare an aqueous solution having a concentration of 10 mass%. 20 g of ilmenite particles (average particle diameter: 120 µm) was immersed in this aqueous solution for 60 minutes to impregnate the ilmenite particles with the aqueous solution. The ilmenite particles were extracted and dried at 120°C for about 60 minutes by a dryer, thereby preparing an impregnation mixture. The obtained impregnation mixture was placed in an alumina container and calcined at 920°C for 3 hours, thereby producing an activated ilmenite (potassium-modified ilmenite) 2. The potassium loading amount of the activated ilmenite 2 is about 2.0 wt%, and a mole ratio (K/Ti) of potassium to titanium is about 0.084.

### <Spray Mixing Method>

1.8 g of potassium carbonate was dissolved in 2.5 mL of pure water to prepare an aqueous solution having a concentration of 72 mass%. This aqueous solution was sprayed while shaking 20 g of ilmenite particles (average particle diameter: 120 µm), thereby preparing a spray mixture. The obtained spray mixture was placed in an alumina container and calcined at 920°C for 3 hours, thereby producing an activated ilmenite (potassium-modified ilmenite) 3. The potassium loading amount of the activated ilmenite 3 is about 2.0 wt%, and a mole ratio (K/Ti) of potassium to titanium is about 0.084.

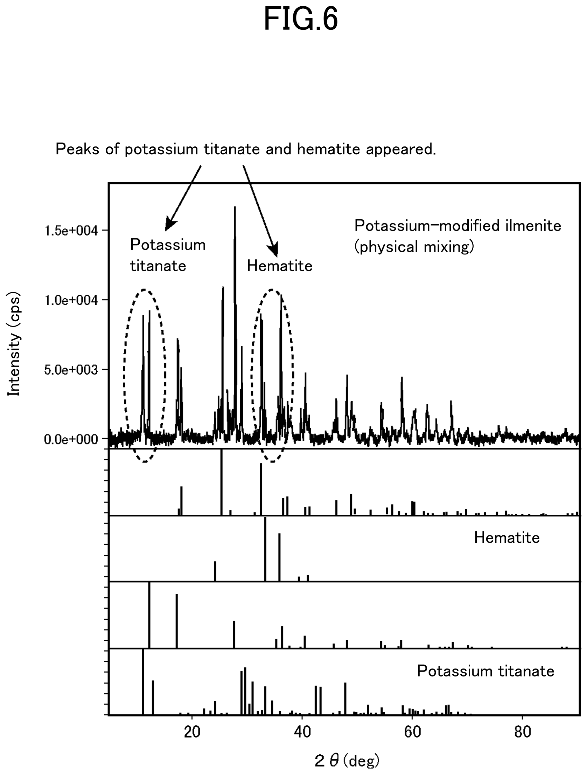

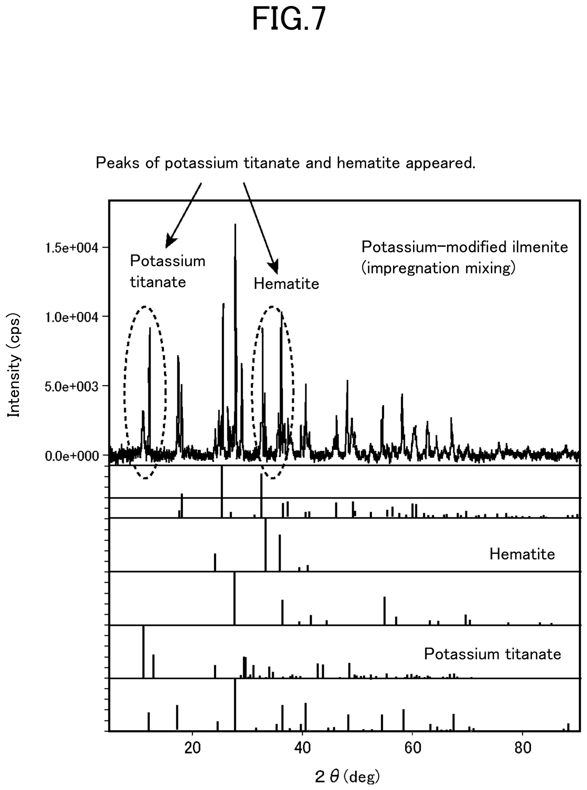

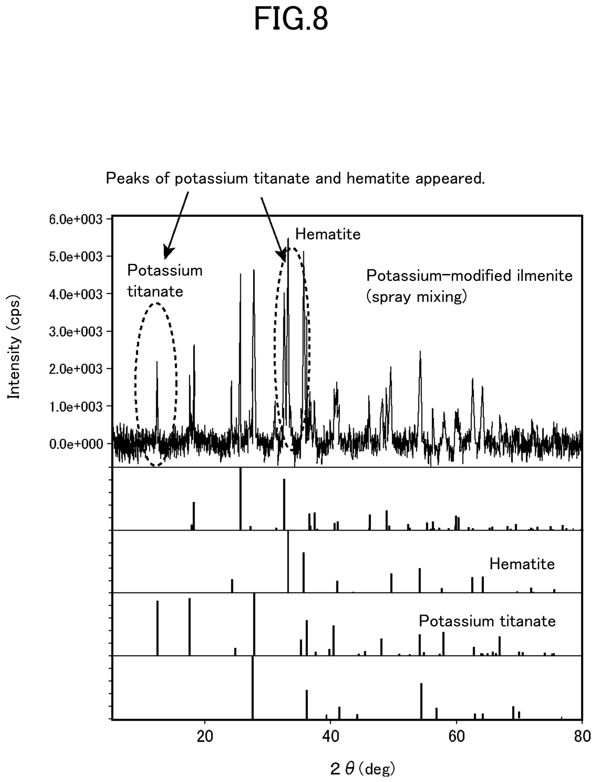

XRD measurement results of the produced activated ilmenite 1, activated ilmenite 2, and activated ilmenite 3 are illustrated in FIG. 6, FIG. 7, and FIG. 8, respectively. In any of the measurement results, a peak of hematite appears clearly together with a peak of potassium titanate. It was confirmed that potassium titanate and hematite are present in the activated ilmenite produced by the method of the present invention.

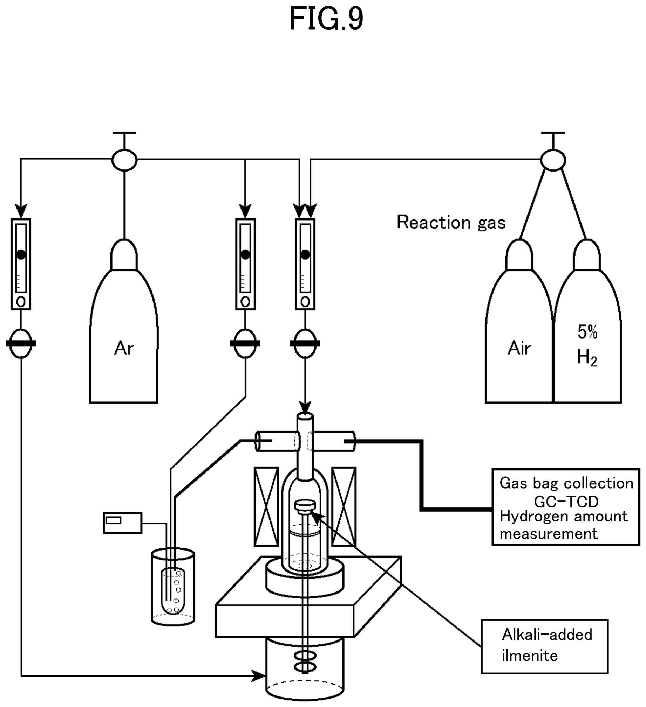

With an apparatus illustrated in FIG. 9, a reducibility and a steam oxidation reactivity of the activated ilmenite were evaluated. Specifically, 0.05 g of the activated ilmenite was placed in a container, and a test was performed under conditions below to examine a mass change ratio. For comparison, the mass change ratio was similarly examined for an unactivated ilmenite (uncalcined ilmenite).

### Reduction

CO 15%/CO₂ 20%/Ar atmosphere at 900°C for 30 minutes

### Steam Oxidation

steam 45%/Ar atmosphere at 900°C for 15 minutes

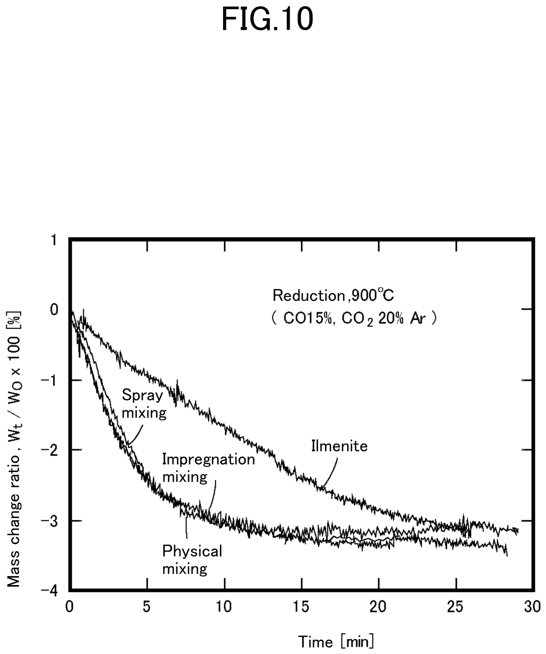

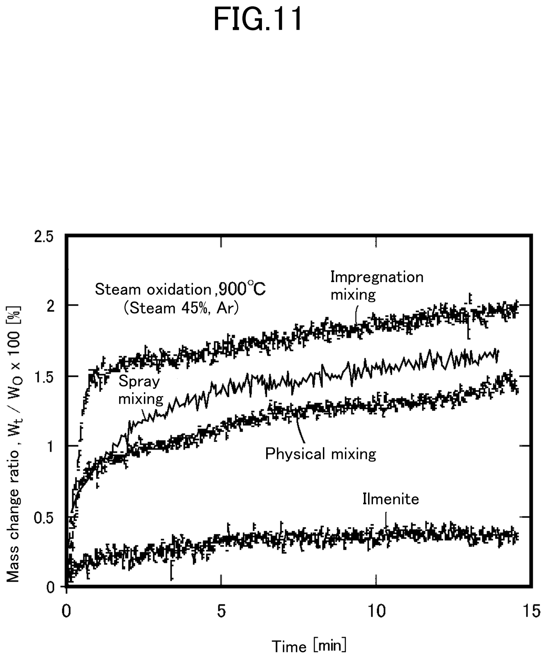

FIG. 10 illustrates the mass change ratio in the reduction reaction, and FIG. 11 illustrates the mass change ratio in the steam oxidation reaction. It was confirmed that any of the physical mixing (activated ilmenite 1), the impregnation mixing (activated ilmenite 2), and the spray mixing (activated ilmenite 3) is larger in mass change ratio than the ilmenite, and has the reaction activity multiple times higher than that of the ilmenite.

Next, six types of activated ilmenite (potassium-modified ilmenite) different in potassium loading amount were produced by the spray mixing method to examine the influence of the potassium loading amount on the reduction reaction and the steam oxidation reaction. The potassium loading amount was adjusted by changing an amount of potassium carbonate in a range of 0 wt% to 3.8 wt%.

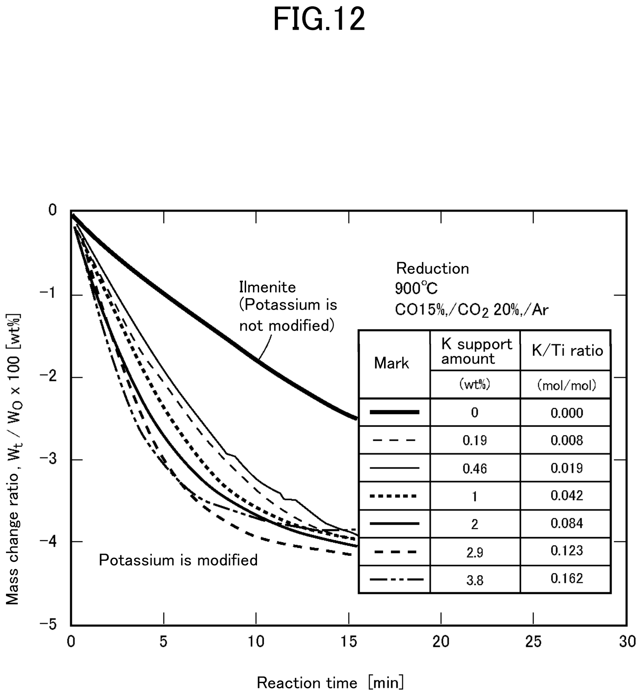

FIG. 12 illustrates a change over time of the mass change ratio in the reduction reaction. It is seen that when 0.19 wt% of potassium is modified, the mass change ratio at the beginning of the reduction reaction increases, and the reduction reactivity is increased. In this case, a mole ratio (K/Ti ratio) of potassium to titanium is 0.008. To increase the reduction reactivity, (K/Ti ratio) is preferably 0.008 or more. When the potassium loading amount increases, the mass change ratio also tends to increase, but even when 2 wt% or more of potassium is modified, the reactivity does not necessarily increase significantly.

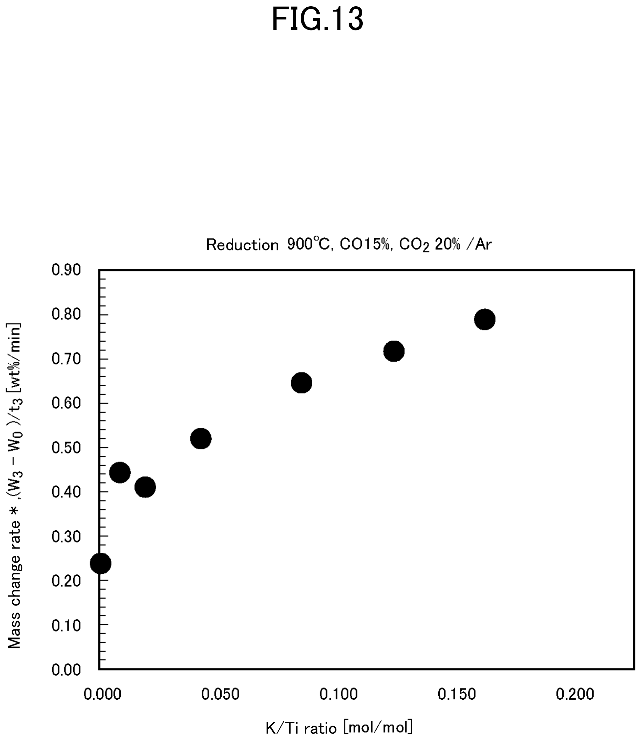

FIG. 13 illustrates a relation between the mole ratio (K/Ti ratio) of potassium to titanium in the activated ilmenite and the mass change rate. W₃, W₀, t₃ in the mass change rate ((W₃ - W₀)/t₃) express the meanings below.
W₃: mass change at three minutes (wt%)
W₀: mass change at zero minutes (wt%)
t₃: time at W₃ (min)

Until the K/Ti ratio becomes 0.008%, the mass change rate rapidly increases. When the K/Ti ratio exceeds 0.008%, the increase of the mass change rate is relatively small.

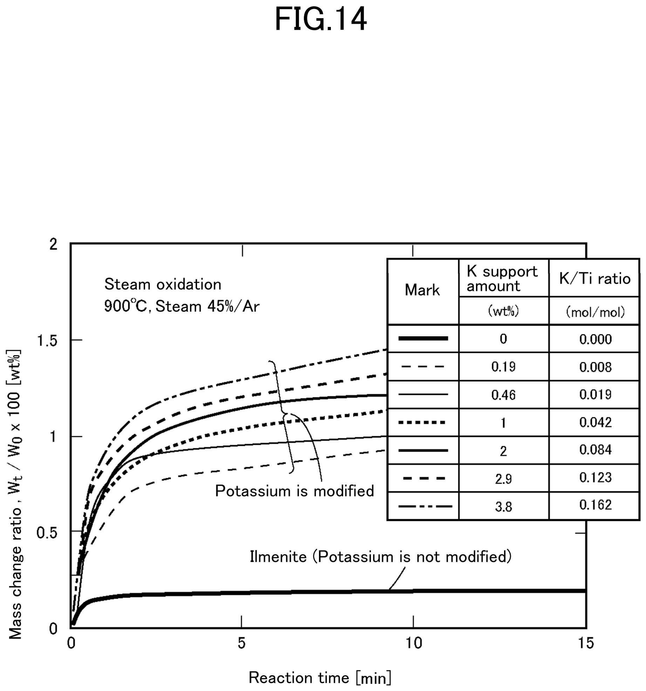

FIG. 14 illustrates an increase over time of the mass change ratio in the steam oxidation reaction. It is seen that when 0.19 wt% of potassium is modified, the mass change ratio at the beginning of the reaction increases, and the steam oxidation reactivity is increased. To increase also the steam oxidation reactivity, (K/Ti ratio) is preferably 0.008 or more. When the potassium loading amount increases, the mass change ratio also tends to increase, but even when 2 wt% or more of potassium is modified, the reactivity does not necessarily increase significantly.

Since the activated ilmenite produced by the method of the present invention is a highly active oxygen carrier having a high reaction activity, the activated ilmenite produced by the method of the present invention can be effectively used for chemical looping combustion and hydrogen production.

### DESCRIPTION OF REFERENCE NUMERAL

- 10: Air combustion tower
- 12: Fuel reaction activation tower
- 14: Hydrogen generation tower

## Claims

1. A method for producing an oxygen carrier formed of an activated iron titanate containing an alkali titanate and an iron oxide by calcining a mixture of iron titanate particles and an alkali component, wherein
the mixture of the iron titanate particles and the alkali component is prepared by any of:
physically mixing the iron titanate particles and an alkaline compound; and
spraying an aqueous solution of the alkaline compound to the iron titanate particles or impregnating the iron titanate particles with the aqueous solution of the alkaline compound and then drying the sprayed or impregnated iron titanate particles.

2. The method for producing an oxygen carrier according to claim 1, wherein
the iron titanate is an ilmenite.

3. The method for producing an oxygen carrier according to claim 1 or 2, wherein
the alkaline compound is a potassium carbonate.

4. The method for producing an oxygen carrier according to claim 1 or 2, wherein
the calcining is performed at 800°C to 980°C for 0.5 to 3 hours.

5. A method for producing an oxygen carrier formed of an activated iron titanate containing an alkali titanate and an iron oxide by calcining a mixture of iron titanate particles and an alkali component, wherein
the iron titanate particles are brought into contact with the alkali component in a high temperature reactor.

6. The method for producing an oxygen carrier according to claim 5, wherein
the high temperature reactor is a fluidized bed or a circulating fluidized bed into which the iron titanate particles are introduced as a fluidizing medium.

7. The method for producing an oxygen carrier according to claim 5 or 6, wherein
a temperature of the high temperature reactor is 800°C to 1000°C.

8. The method for producing an oxygen carrier according to claim 5 or 6, wherein
the alkali component is supplied separately from a fuel for combustion.

9. The method for producing an oxygen carrier according to claim 5 or 6, wherein
the alkali component is supplied as a fuel for combustion.

10. The method for producing an oxygen carrier according to claim 9, wherein
the fuel is selected from lignite and biomass.

11. A method for producing hydrogen, comprising:
an air combustion step of burning a fuel in a presence of iron titanate particles;
a fuel reaction activation step of bringing the iron titanate particles into contact with an alkali component to form an activated iron titanate containing an alkali titanate and an iron oxide; and
a hydrogen generation step of generating hydrogen through a reaction of the iron oxide generated in the fuel reaction activation step and steam.

12. The method for producing hydrogen according to claim 11, wherein
the fuel reaction activation step is performed at 800°C to 980°C.

13. The method for producing hydrogen according to claim 11 or 12, wherein
the alkali component is supplied separately from a fuel for combustion.

14. The method for producing hydrogen according to claim 11 or 12, wherein
the alkali component is supplied as a fuel for combustion.

15. The method for producing hydrogen according to claim 14, wherein
the fuel is selected from lignite and biomass.

16. An apparatus for producing hydrogen, comprising:
an air combustion tower that burns a fuel in a presence of iron titanate particles;
a fuel reaction activation tower that brings the iron titanate particles into contact with an alkali component to form an activated iron titanate containing an alkali titanate and an iron oxide; and
a hydrogen generation tower that generates hydrogen through a reaction of the iron oxide generated in the fuel reaction activation step and steam.

17. The apparatus for producing hydrogen according to claim 16, wherein
a temperature of the fuel reaction activation tower is 800°C to 980°C.

18. The apparatus for producing hydrogen according to claim 16 or 17, wherein
the alkali component is an alkaline compound supplied separately from a fuel for combustion.

19. The apparatus for producing hydrogen according to claim 16 or 17, wherein
the alkali component is contained in a fuel for combustion.

20. The apparatus for producing hydrogen according to claim 19, wherein
the fuel is selected from lignite and biomass.

21. A method for producing hydrogen through a reaction of an oxygen carrier and steam, wherein
the oxygen carrier is produced by the method according to claim 1 or 5.

22. An oxygen carrier that is produced by the method according to claim 3 and contains a potassium titanate as the alkali titanate.

23. The oxygen carrier according to claim 22, wherein
a mole ratio (K/Ti) of potassium to titanium in the potassium titanate is 0.008 or more.

24. A chemical looping combustion method using the oxygen carrier according to claim 23.
